# EUROPÄISCHE PATENTSCHRIFT

(11) **EP 1 006 635 B1**
(45) Veröffentlichungstag und Bekanntmachung des Hinweises auf die Patenterteilung: **07.05.2003**
(21) Anmeldenummer: 99121923.9
(22) Anmeldetag: 05.11.1999
(51) Int. Cl.: H02G 3/04, F16L 3/26

(54) **Endstück für Leitungsführungskanäle**
Terminating element for conductor-supporting raceways
Pièce terminale pour canalisations supports de conducteurs

(30) Priorität: 02.12.1998 DE 29821516 U
(43) Veröffentlichungstag der Anmeldung: 07.06.2000
(73) Patentinhaber: Tehalit GmbH & Co. KG, 67716 Heltersberg (DE)
(72) Erfinder: Schnurr, Richard, 66957 Vinningen (DE); Lindner, Raymond, 67500 Weitbruch (FR)
(74) Vertreter: Patentanwälte Möll und Bitterich

(56) Entgegenhaltungen:
- EP-A- 0 508 192

## Beschreibung

Die Erfindung betrifft Endstücke für den seitlichen Abschluß von Leitungsführungskanälen, insbesondere von Leitungsführungskanälen mit asymmetrischem Querschnitt, gemäß dem Oberbegriff des Anspruchs 1. (Siehe EP-A-0 508 192).

Leitungsführungskanäle der hier relevanten Art bestehen aus einem Unterteil, zu befestigen an Wand oder Decke, und einem daran lösbar zu befestigenden Oberteil. Das Unterteil ist im wesentlichen trogförmig. Es gibt Unterteile mit symmetrischem, beispielsweise U- bzw. C-förmigem Querschnitt, und Unterteile mit einem asymmetrischen Querschnitt.

Um die Leitungsführungskanäle an ihrem rechten oder linken Ende verschließen zu können, gibt es seit jeher rechte und linke Endstücke. Diese sind zueinander spiegelsymmetrisch. Die Kanalhersteller müssen somit für jeden Kanal zwei derartige Formstücke produzieren, listen und versenden. Der Installateur muß darauf achten, daß er das richtige Formstück bestellt. Erfahrungsgemäß kommt es immer wieder zu Verwechslungen. Der Installateur kann seinen Kanal nicht fertig montieren, der Hersteller muß einzelne Formstücke verschicken. Dies ist unbefriedigend.

Der vorliegenden Erfindung liegt daher die Aufgabe zugrunde, ein Endstück anzugeben, das sowohl auf die rechten wie auf die linken Enden der Leitungsführungskanäle paßt.

Diese Aufgabe wird durch ein Endstück mit den Merkmalen des Anspruchs 1 gelöst.

Der vorliegenden Erfindung liegt das Prinzip zugrunde, die Verschlußfunktion und die Haltefunktion des Endstücks zwei getrennten Platten zuzuordnen. Die Verschlußplatte ist mit identischer Vorder- und Rückseite ausgeführt und paßt daher sowohl auf das rechte als auch auf das linke Kanalende. Die Halteplatte ist so ausgebildet, daß sie gewendet und dann auf das rechte wie auf das linke Ende aufgesteckt werden kann.

Vorzugsweise besitzt die Verschlußplatte an ihrem Umfang einen erhöhten Rand. Dieser kaschiert die Schnittkanten am Ende des Leitungsführungskanals.

Vorzugsweise besitzt die Halteplatte eine symmetrische Form. Dadurch erhält man sowohl am rechten wie am linken Ende des Leitungsführungskanals ein identisches Aussehen.

Anhand der Zeichnung soll die Erfindung in Form von Ausführungsbeispielen näher erläutert werden. Es zeigen
- Fig. 1: eine Draufsicht auf eine Verschlußplatte,
- Fig. 2: eine Seitenansicht einer Halteplatte,
- Fig. 3: eine Seitenansicht einer Kombination von Verschlußplatte und Halteplatte,
- Fig. 4: einen vergrößerten Ausschnitt gemäß Linie IV in Fig. 3,
- Fig. 5: in schematischer, perspektivischer Darstellung ein Ende eines niedrigen Leitungsführungskanals und
- Fig. 6: in schematischer, perspektivischer Darstellung ein Ende eines hohen Leitungsführungskanals.

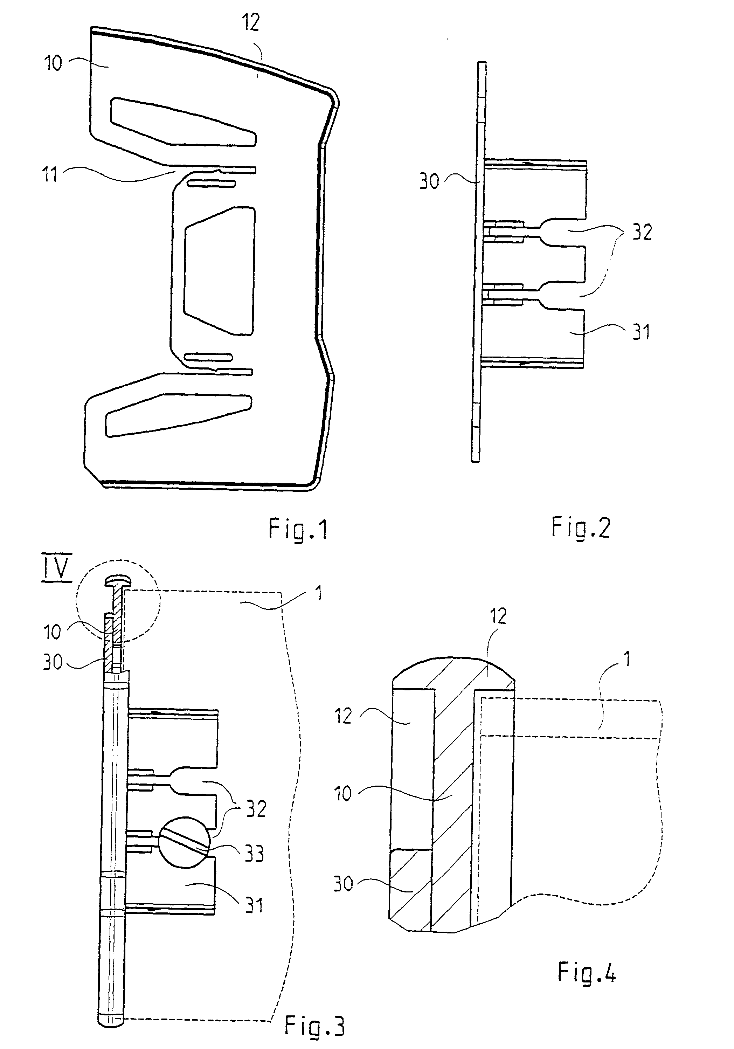

Fig. 1 zeigt eine Draufsicht auf eine Verschlußplatte 10 für den seitlichen Abschluß Leitungsführungskanals mit asymmetrischem Querschnitt. Die Platte 10 besitzt eine rückwandseitige Aussparung 11 sowie einen an drei Seiten umlaufenden erhöhten Rand 12. Vorderseite und Rückseite der Verschlußplatte 10 sind identisch.

Fig. 2 zeigt als Seitenansicht eine Halteplatte 30 mit einer von der Platte 30 senkrecht abstehenden, im Querschnitt U-förmigen Halterung 31. Form und Abstand der Halterung 31 korrespondiert mit der Aussparung 11 in der Verschlußplatte 10. Langlöcher 32 dienen zur Befestigung der Halteplatte 30 auf dem Kanalboden.

Fig. 3 zeigt als Seitenansicht die Verschlußplatte 10 der Fig. 1 mit aufgesetzter Halteplatte 30 gemäß Fig. 2. Diese Kombination 10, 30 ist auf das linke Ende eines nur angedeuteten Leitungsführungskanals 1 aufgesetzt Die Halterung 31 ist im Leitungsführungskanal 1 mit einer Schraube 33 festgeschraubt.

Fig. 4 zeigt in vergrößerter Darstellung den Ausschnitt IV aus Fig. 3. Man erkennt die Verschlußplatte 10 mit dem auf der Vorder- und Rückseite dreiseitig umlaufenden erhöhten Rand 12, der das Ende des Leitungsführungskanals 1 kaschiert

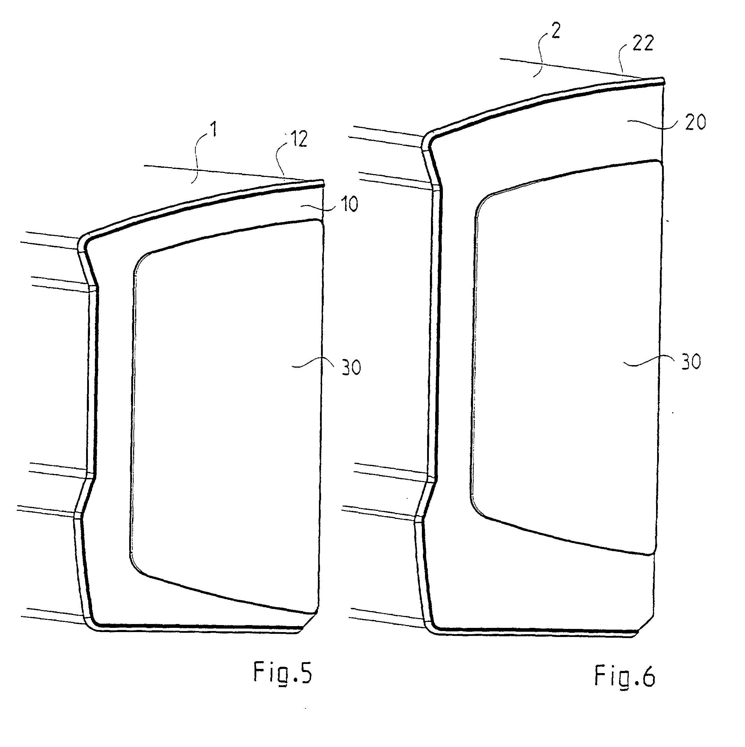

Fig. 5 zeigt in ausschnittsweiser und perspektivischer Darstellung das rechte Ende eines Leitungsführungskanals 1 geringer Höhe. Die Verschlußplatte 10 verschließt das Kanalende, die Halteplatte 30 ihrerseits fixiert die Verschlußplatte 10. Die Form der Halteplatte 30 ist symmetrisch, so daß sich bei der Montage sowohl auf dem rechten als auch auf dem linken Kanalende stets ein identisches Aussehen ergibt.

Fig. 6 zeigt in ausschnittsweiser perspektivischer Darstellung das rechte Ende eines Leitungsführungskanals 2 großer Höhe. Das Kanalende ist mit einer Verschlußplatte 20 verschlossen, die an den Querschnitt des Leitungsführungskanals 2 angepaßt ist. Auch die Verschlußplatte 20 besitzt einen dreiseitig umlaufenden erhöhten Rand 22 als Schnittkaschierung. Die Halteplatte 30 fixiert die Verschlußplatte 20 auf dem Ende des Leitungsführungskanals 2.

## Patentansprüche

1. Endstück für den seitlichen Abschluß von Leitungsführungskanälen (1, 2), insbesondere mit asymmetrischem Querschnitt, **gekennzeichnet durch**
- eine Verschlußplatte (10, 20)
-- mit identischer Vorder- und Rückseite
-- angepaßt an den Querschnitt des Leitungsführungskanals (1, 2)
-- und mit wenigstens einer Aussparung (11)
- und eine Halteplatte (30),
-- nicht größer als die Verschlußplatte (10, 20)
--- und mit wenigstens einer Halterung (31),
--- passend **durch** die Aussparung (11)
--- und zum Befestigen im Leitungsführungskanal (1, 2).

2. Endstück nach Anspruch 1, **gekennzeichnet durch**
- einen erhöhten Rand (12, 22) am Umfang der Verschlußplatte (10, 20) zur Schnittkaschierung.

3. Endstück nach Anspruch 1 oder 2, **gekennzeichnet durch**
- eine symmetrische Form der Halteplatte (30).

4. Endstück nach Anspruch 1, 2 oder 3, **gekennzeichnet durch**
- einen U-förmigen Querschnitt der Halterung (31).

5. Endstück nach einem der Ansprüche 1 bis 4, **gekennzeichnet durch**
- wenigstens ein Langloch (32) in der Halterung (31).

## Claims

1. An end piece for the lateral termination of cable routing ducts (1, 2), in particular of asymmetrical cross-section, **characterised by**
- a closure plate (10, 20)
― with identical front and rear sides
― adapted to the cross-section of the cable routing duct (1, 2)
― and with at least one recess (11)
- and a retaining plate (30),
― not larger than the closure plate (10, 20)
― and with at least one socket (31),
― fitting the recess (11)
― and to be fastened in the cable routing duct (1, 2).

2. An end piece according to Claim 1, **characterised by**
- a raised edge (12, 22) on the periphery of the closure plate (10, 20) for edge bonding.

3. An end piece according to Claim 1 oder 2, **characterised by**
- a symmetrical shape of the retaining plate (30).

4. An end piece according to Claim 1, 2 or 3, **characterised by**
- a U-shaped cross-section of the socket (31).

5. An end piece according to any one of Claims 1 to 4, **characterised by**
- at least one slot (32) in the socket (31).

## Revendications

1. Pièce terminale pour la fermeture latérale de canalisation supports de conducteurs (1, 2), notamment avec une section asymétrique, **caractérisée par :**
- une plaque d'obturation (10, 20)
-- avec une face avant identique à la face arrière
-- adaptée à la section de la canalisation support de conducteur (1, 2)
-- et avec au moins un évidement (11)
- et une plaque de maintien (30),
-- qui n'est pas plus grande que la plaque d'obturation (10, 20)
-- et avec au moins une fixation (31)
-- s'adaptant à l'évidement (11)
-- et pour la fixation dans la canalisation support de conducteur (1, 2).

2. Pièce terminale selon la revendication 1, **caractérisée par**
- un bord surélevé (12, 22) sur le pourtour de la plaque d'obturation (10, 20) pour couvrir la section.

3. Pièce terminale selon la revendication 1 ou 2, **caractérisée par**
- une forme symétrique de la plaque de maintien (30).

4. Pièce terminale selon la revendication 1, 2 ou 3, **caractérisée par**
- une section en forme de U de la fixation (31).

5. Pièce terminale selon l'une des revendications 1 à 4, **caractérisée par**
- au moins un trou oblong (32) dans la fixation (31).
